# EUROPÄISCHE PATENTANMELDUNG

(11) **EP 1 121 906 A2**
(43) Veröffentlichungstag der Anmeldung: **08.08.2001**
(21) Anmeldenummer: 00127627.8
(22) Anmeldetag: 16.12.2000
(51) Int. Cl.: A61C 8/00, A61C 1/18

(54) **Schraubendreher für intraorale Implantation**

(30) Priorität: 04.02.2000 DE 10005137
(71) Anmelder: Degussa-Hüls Aktiengesellschaft, 60287 Frankfurt am Main (DE)
(72) Erfinder: Holweg, Andreas, Dr., 37127 Jühnde (DE); Köhler, Carsten Georg, 63594 Hasselroth-Niedermittlau (DE); Kremer, Egbert, 63454 Hanau (DE)

(57) **Zusammenfassung**

Ein Schraubendreher für die intraorale Implantation weist einen Schraubendreherschaft (2) auf, der an seinem einen Ende mit einem Handstück(1) und an seinem anderen Ende über ein Winkelgetriebe (3) mit einer drehbaren Werkzeugaufnahme (4) verbunden ist. Der Schraubendreherschaft (2) besteht mindestens teilweise aus relativ zueinander schwenkbaren Schaftsegmenten (6), die durch eine gemeinsame, längsverlaufende Spannvorrichtung zur Fixierung gegeneinander verspannbar sind. Eine Antriebswelle besteht im Bereich der Schaftsegmente (6) aus einzelnen Wellenstücken, die jeweils im Verbindungsbereich zweier Schaftsegmente (6) über ein Wellenwinkelgetriebe miteinander zur Drehmomentübertragung verbunden sind.

## Beschreibung

Die Erfindung betrifft einen Schraubendreher für die intraorale Implantation, mit einem Schraubendreherschaft, der an seinem einen Ende mit einem Handstück und an seinem anderen Ende über ein Winkelgetriebe mit einer drehbaren Werkzeugaufnahme verbunden ist, die über eine im Schraubendreherschaft drehbar aufgenommene Antriebswelle mit einem Drehantrieb am Handstück verbunden ist.

Derartige Schraubendreher dienen dazu, die an Zahnimplantaten in der Mundhöhle vorzunehmenden Schraubvorgänge auszuführen, insbesondere die zum Anbringen von Implantatpfosten und Schrauben an eingesetzten Implantaten erforderlichen Schraubvorgänge durchzuführen. Wegen der unterschiedlichen Zugänglichkeit der Implantate werden hierfür bisher unterschiedliche Schraubendreher in starren Ausführungsformen verwendet. Bei einem bekannten Schraubendreher der eingangs genannten Gattung ist das Handstück über einen geraden, starren Schraubendreherschaft mit einem 90°-Winkelgetriebe verbunden, an das die drehbare Werkzeugaufnahme angeschlossen ist, in der unterschiedliche Schraubendreherklingen aufgenommen werden können. Wegen der starren Ausführung als 90°-Winkelschraubendreher sind die Einsatzmöglichkeiten beschränkt; für schwer zugängliche Implantate müssen weiterhin zusätzliche spezielle Schraubendreher bereitgehalten und eingesetzt werden.

Aufgabe der Erfindung ist es daher, einen Schraubendreher der eingangs genannten Gattung so auszubilden, daß er für alle bei der intraoralen Implantation, insbesondere an Zahnimplantaten vorkommenden Schrauben geeignet ist, insbesondere auch an schwer zugänglichen Stellen in der Mundhöhle.

Diese Aufgabe wird erfindungsgemäß dadurch gelöst, daß der Schraubendreherschaft mindestens teilweise aus relativ zueinander schwenkbaren Schaftsegmenten besteht, die durch eine gemeinsame, längs verlaufende Spannvorrichtung zur Fixierung gegeneinander verspannbar sind, und daß die Antriebswelle im Bereich der Schaftsegmente aus einzelnen Wellenstücken besteht, die jeweils im Verbindungsbereich zweier Schaftsegmente über ein Wellengetriebe miteinander zur Drehmomentübertragung verbunden sind.

Der vor dem Anziehen der Spannvorrichtung flexible Schraubendreherschaft kann in die für jeden Einsatzfall optimale Form gebracht und mittels der Spannvorrichtung in dieser Stellung fixiert werden, so daß die Werkzeugaufnahme auch für den Einsatz an schwer zugänglichen Stellen in der Mundhöhle des Patienten in die jeweils günstigste Stellung gebracht werden kann. Alle an Zahnimplantaten anfallenden Schraubaufgaben können daher mit einem einzigen Schraubendreher ausgeführt werden, da dieser flexibel anpaßbar ist. Die Drehmomentübertragung erfolgt zwischen den einzelnen Wellenstücken der Antriebswelle formschlüssig und mit nur geringer Drehelastizität.

Gemäß einer bevorzugten Ausführungsform der Erfindung ist vorgesehen, daß jedes Schaftsegment an seinem einen Ende eine konkave, einen Zylinderabschnitt bildende Gleitfläche und an seinem anderen Ende eine konvexe, einen Zylinderabschnitt bildende Gleitfläche aufweist, wobei die beiden Zylinderabschnitte gleiche Radien und um 90° zueinander versetzte Achsrichtungen aufweisen.

Zwischen jeweils zwei benachbarten Schaftsegmenten wird somit ein nur um eine Achse schwenkbares Gelenk geschaffen, das bei der Fixierung durch die längsverlaufende Spannvorrichtung aber eine sehr stabile Verbindung der beiden Schaftsegmente ergibt. Gleichwohl ist aber eine allseitige Anpaßbarkeit des Schraubendreherschafts gegeben, weil die in kurzen Abständen aufeinanderfolgenden Gelenke zwischen den Schaftsegmenten eine Schwenkung in jeweils um 90° zueinander stehenden Achsen ermöglichen.

Vorteilhaft weist die gemeinsame Spannvorrichtung der Schaftsegmente mindestens zwei Spannseile auf, die in jedem Schaftsegment durch einander diagonal gegenüberliegende Spannkanäle verlaufen.

Damit wird in konstruktiv einfacher Weise und mit sehr geringem Platzbedarf eine Spannvorrichtung realisiert, die eine Fixierung des gesamten flexiblen Schraubendreherschafts in jeder vorgegebenen Stellung ermöglicht. Hierzu reicht es aus, an den Spannseilen einen Zug auszuüben.

Gemäß einer bevorzugten Ausführungsform ist vorgesehen, daß zwei Paare von jeweils diagonal zueinander angeordneten Spannseilen vorgesehen sind und daß die beiden Spannseile jedes Paares an einem Ende zum Längenausgleich miteinander verbunden sind.

Damit werden die durch eine einseitige Krümmung des Schraubendreherschafts bedingten Längenunterschiede von Spannseilen, die an der Krümmungsaußenseite bzw. der Krümmungsinnenseite liegen, in einfacher Weise ausgeglichen, so daß in jeder Krümmungsstellung alle Spannseile zur Fixierung der Schaftsegmente beitragen.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist.

Es zeigt:
Fig. 1 einen Schraubendreher für die intraorale Implantation
   in räumlicher Darstellungsweise,
Fig. 2 den flexiblen Schraubendreherschaft des Schraubendrehers gemäß Fig. 1 in mehrfach gekrümmter Stellung,
Fig. 3 in räumlicher Darstellungsweise und teilweise aufgeschnitten zwei Schaftsegmente des Schraubendrehers nach Fig. 1 mit den darin angeordneten Wellenstücken,
Fig. 4 in räumlicher Darstellungsweise und teilweise aufgeschnitten ein Winkelgetriebe am werkzeugseitigen Ende des Schraubendreherschafts und

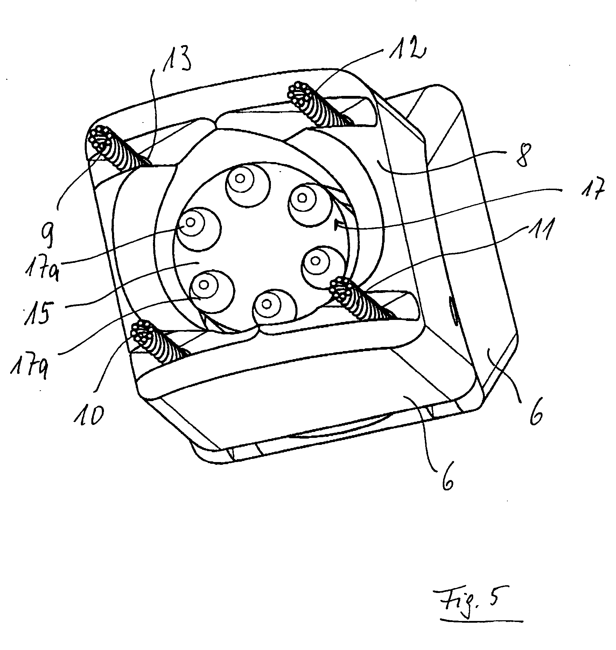

Fig. 5 in räumlicher Darstellungsweise einen Querschnitt durch den Schraubendreherschaft an der Verbindungsstelle zweier Schaftsegemente.

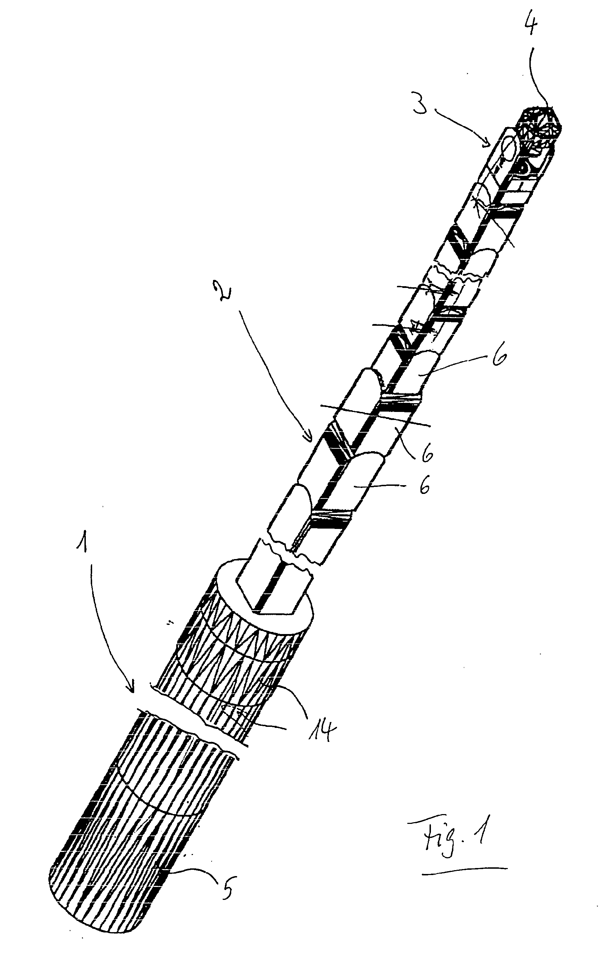

Der in Fig. 1 gezeigte Schraubendreher für die intraorale Implantation weist ein Handstück 1 auf, an das sich ein länglicher, mehrgliedriger Schraubendreherschaft 2 anschließt. An seinem dem Handstück 1 abgekehrten Ende ist der Schraubendreherschaft 2 über ein Winkelgetriebe 3 mit einer drehbaren Werkzeugaufnahme 4 verbunden, die beispielsweise als Anschlußkupplung für unterschiedliche Schraubendreherklingen ausgeführt ist.

Am Handstück 1 ist ein Drehantrieb vorgesehen, der beim dargestellten Ausführungsbeispiel aus einem manuell zu betätigenden Drehgriff 5 besteht, der über eine im Schraubendreherschaft 2 liegende, mehrgliedrige Antriebswelle und das Winkelgetriebe 3 mit der drehbaren Werkzeugaufnahme 4 in drehmomentübertragender Verbindung steht.

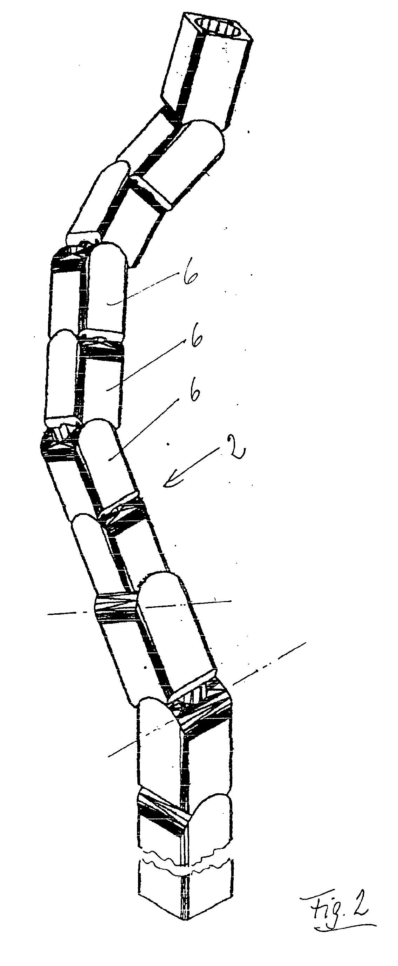

Der Schraubendreherschaft 2 besteht aus mehreren, relativ zueinander schwenkbaren Schaftsegmenten 6 und ist daher flexibel. Der Schraubendreherschaft 2 kann vor dem Einsatz des Schraubendrehers in jede beliebige, durch die gelenkige Verbindung der Schaftsegmente 6 zugelassene Form gebracht werden, wie in Fig. 2 beispielsweise dargestellt ist.

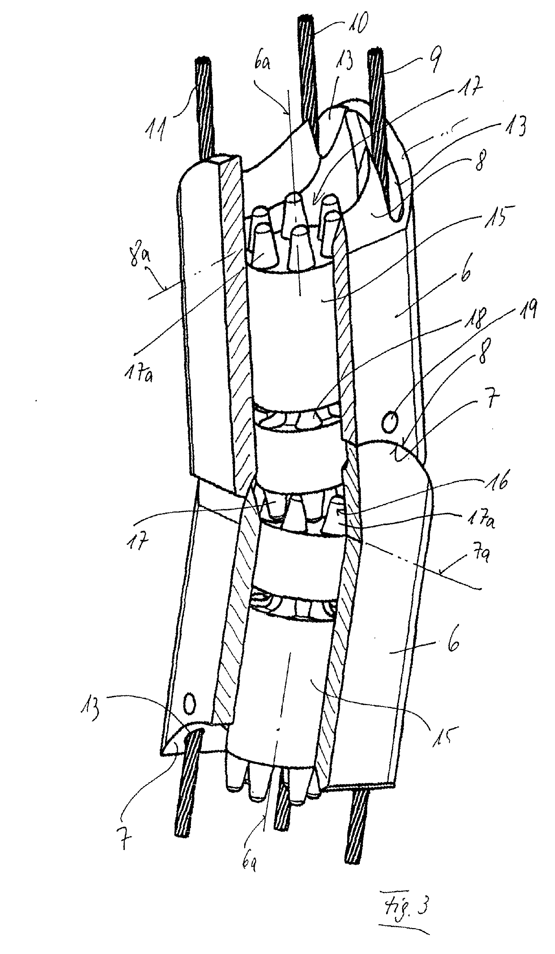

Wie in Fig. 3 in Einzelheiten gezeigt ist, weist jedes Schaftsegment 6 an seinem einen Ende, beispielsweise dem dem Handstück 1 zugekehrten Ende, eine konkave, als Zylinderabschnitt ausgebildete Gleitfläche 7 auf. An seinem anderen Ende, beispielsweise dem der Werkzeugaufnahme 4 zugekehrten Ende, weist jedes Schaftsegment 6 eine konvexe, ebenfalls von einem Zylinderabschnitt gebildete Gleitfläche 8 auf. Die Zylinderabschnitte der beiden Gleitflächen 7, 8 haben gleiche Radien, so daß die beiden Gleitflächen 7, 8 flächig aufeinander gleiten können, wie in Fig. 3 dargestellt ist. Die Achsrichtungen 7a und 8a der beiden die Gleitflächen 7 bzw. 8 bildenden Zylinderabschnitte sind um die Längsachse 6a jedes Schaftsegments 6 um jeweils 90° zueinander versetzt. Dadurch ergeben sich an aufeinander folgenden Verbindungsstellen der Schaftsegmente 6 im Verlauf des Schraubendreherschafts 2 abwechselnd um 90° zueinander versetzte Schwenkrichtungen, die aber insgesamt eine räumliche Verformbarkeit des mehrgliedrigen Schraubendreherschafts 2 ergeben, wie in Fig. 2 beispielsweise angedeutet ist.

Zur Fixierung des Schraubendreherschafts 2 in der für den jeweiligen Einsatzfall gewählten Form dient eine gemeinsame Spannvorrichtung. Vier Spannseile 9, 10, 11 und 12 verlaufen in Spannkanälen 13, die in den Spannsegmenten 6 achsparallel ausgebildet sind. Zumindest an den Austrittsstellen an den Gleitflächen 7 und 8 sind die Spannkanäle 13 so verbreitert, daß die Spannseile 9 - 12 auch in jeder Schwenkstellung unbehindert in den Spannkanal 13 des jeweils benachbarten Schaftssegements 6 eintreten können.

Am werkzeugseitigen Ende des Schraubendreherschafts 2 sind jeweils zwei einander diagonal gegenüberliegende Spannseile 9 und 11 bzw. 10 und 12 so miteinander verbunden, daß ein Längenausgleich dieses Paares von Spannseilen 9 und 11 bzw. 10 und 12 ermöglicht wird.

Im Bereich des Handstücks 1 sind alle Spannseile 9 - 12 mit einem gemeinsamen (nicht dargestellten) Spannstück verbunden, das im Handstück mittels eines Gewindetriebs längsverschiebbar ist. Dadurch können alle Spannseile zur Fixierung des Schraubendreherschafts 2 angespannt und auch gelöst werden. Der Gewindetrieb des Spannstücks wird beispielsweise durch Verdrehen eines Drehrings 14 am Handstück 1 betätigt.

Die durch den gesamten Schraubendreherschaft 2 verlaufende Antriebswelle besteht im Bereich der schwenkbaren Schaftsegmente 6 aus einzelnen Wellenstücken 15 (Fig. 3), die jeweils im Verbindungsbereich zweier Schaftsegmente 6 über ein Wellenwinkelgetriebe 16 gelenkig miteinander zur Drehmomentübertragung verbunden sind. Jedes Wellenstück 15 ist im zugeordneten Schaftsegment 6 drehbar gelagert und an seinen beiden Enden mit einem Verzahnungsstirnkranz 17 versehen, der aus achsparallelen, sich verjüngenden Triebzapfen 17a besteht. Die Verzahnungsstirnkränze 17 benachbarter Wellenstücke 15 greifen formschlüssig ineinander. Die sich verjüngende Form der Triebzapfen 17a ermöglicht die Aufrechterhaltung des Verzahnungseingriffs auch bei einer Abwinklung benachbarter Wellenstücke 6, wie in Fig. 3 gezeigt.

Jedes Wellenstück 15 weist eine Umfangsnut 18 auf, in die ein im Schaftsegment 6 befestigter Querstift 19 tangential eingreift. Dadurch wird das drehbare Wellenstück 15 in axialer Richtung im Schaftsegment 6 festgelegt.

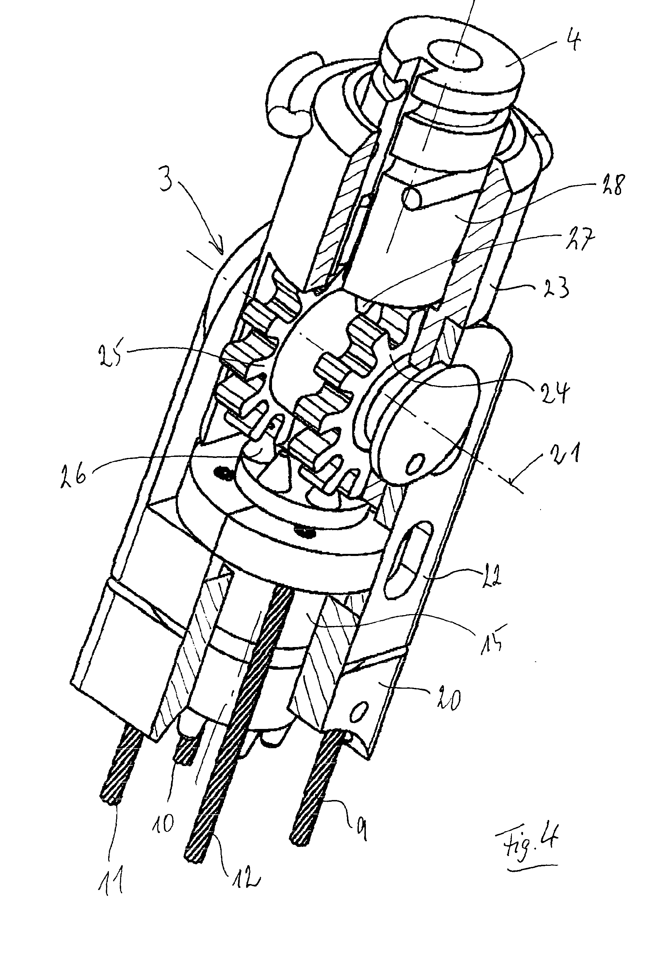

Das an die Werkzeugaufnahme 4 anschließende, in Fig. 4 in Einzelheiten dargestellte Winkelgetriebe 3 ist als Schwenkwinkelgetriebe ausgeführt, das eine Schwenkung der Werkzeugaufnahme 4 (die in Fig. 4 nur teilweise dargestellt ist) gegenüber einem Endsegment 20 des Schraubendreherschafts 2 um eine gemeinsame Querachse 21 ermöglicht. Zwei Gehäuseteile 22 und 23 des Winkelgetriebes 3 sind um die gemeinsame Querachse 21 schwenkbar.

Zwei Übertragungszahnräder 24, 25 sind unabhängig voneinander um die Querachse 21 drehbar im Schwenkwinkelgetriebe 3 gelagert und stehen mit jeweils einem Verzahnungsstirnkranz 26 bzw. 27 der jeweils anschließenden Wellenstücke 15 bzw. 28 in Verzahnungseingriff. Auch wenn das Schwenkwinkelgetriebe 3 aus der in Fig. 4 gezeigten, geradlinig durchgehenden Stellung um die Querachse 21 verschwenkt wird, wird die Drehbewegung des Wellenstücks 15 über den Verzahnungsstirnkranz 26 und die beiden gegensinnig angetriebenen Übertragungsgzahnräder 24, 25 auf den Verzahnungsstirnkranz 27 des mit der Werkzeugaufnahme 4 verbundenen Wellenstück 28 übertragen.

## Patentansprüche

1. Schraubendreher für die intraorale Implantation, mit einem Schraubendreherschaft, der an seinem einen Ende mit einem Handstück und an seinem anderen Ende über ein Winkelgetriebe mit einer drehbaren Werkzeugaufnahme verbunden ist, die über eine im Schraubendreherschaft drehbar aufgenommene Antriebswelle mit einem Drehantrieb am Handstück verbunden ist,
**dadurch gekennzeichnet,**
daß der Schraubendreherschaft (2) mindestens teilweise aus relativ zueinander schwenkbaren Schaftsegmenten (6) besteht, die durch eine gemeinsame, längsverlaufende Spannvorrichtung (9 - 14) zur Fixierung gegeneinander verspannbar sind, und daß die Antriebswelle im Bereich der Schaftsegmente (6) aus einzelnen Wellenstücken (15) besteht, die jeweils im Verbindungsbereich zweier Schaftsegmente (6) über ein Wellenwinkelgetriebe (16) miteinander zur Drehmomentübertragung verbunden sind.

2. Schraubendreher nach Anspruch 1,
**dadurch gekennzeichnet,**
daß jedes Schaftsegment (6) an seinem einen Ende eine konkave, einen Zylinderabschnitt bildende Gleitfläche (7) und an seinem anderen Ende eine konvexe, einen Zylinderabschnitt bildende Gleitfläche (8) aufweist, wobei die beiden Zylinderabschnitte gleiche Radien und um 90° zueinander versetzte Achsrichtungen aufweisen.

3. Schraubendreher nach Anspruch 1,
**dadurch gekennzeichnet,**
daß die gemeinsame Spannvorrichtung der Schaftsegmente (6) mindestens zwei Spannseile (9, 11 bzw. 10, 12) aufweist, die in jedem Schaftsegment (6) durch einander diagonal gegenüberliegende Spannkanäle (13) verlaufen.

4. Schraubendreher nach Anspruch 3,
**dadurch gekennzeichnet,**
daß zwei Paare von jeweils diagonal zueinander angeordneten Spannseilen (9, 11 bzw. 10, 12) vorgesehen sind und daß die beiden Spannseile (9, 11 bzw. 10, 12) jedes Paares an einem Ende zum Längenausgleich miteinander verbunden sind.

5. Schraubendreher nach Anspruch 3 oder 4,
**dadurch gekennzeichnet,**
daß alle Spannseile (9 - 12) mit einem im Handstück (1) mittels eines Gewindetriebs längsverschiebbaren Spannstück verbunden sind.

6. Schraubendreher nach Anspruch 1,
**dadurch gekennzeichnet,**
daß jedes Wellenstück (15) im zugeordneten Schaftsegment (6) drehbar gelagert ist und an seinen beiden Enden einen Verzahnungsstirnkranz (17) aus achsparallelen, sich verjüngenden Triebzapfen (17a) aufweist, wobei die Verzahnungsstirnkränze (17) benachbarter Wellenstücke (15) formschlüssig ineinandergreifen.

7. Schraubendreher nach Anspruch 1,
**dadurch gekennzeichnet,**
daß das an die Werkzeugaufnahme (4) anschließende Winkelgetriebe (3) ein Schwenkwinkelgetriebe ist und zwei um eine gemeinsame Querachse (21) schwenkbare Gehäuseteile (22, 23) aufweist, daß mindestens ein Übertragungszahnrad (24 bzw. 25) um die gemeinsame Querachse (21) drehbar gelagert ist und mit jeweils einem Verzahnungsstirnkranz (26, 27) der jeweils anschließenden Wellenstücke (15, 28) in Verzahnungseingriff steht.

8. Schraubendreher nach Anspruch 7, dadurch gekennzeichnet, daß zwei unabhängig voneinander um die Querachse (21) drehbare Übertragungszahnräder (24, 25) im Schwenkwinkelgetriebe (3) gelagert sind.
